# EUROPÄISCHE PATENTSCHRIFT

(11) **EP 2 112 055 B1**
(45) Veröffentlichungstag und Bekanntmachung des Hinweises auf die Patenterteilung: **18.04.2012**
(21) Anmeldenummer: 09002806.9
(22) Anmeldetag: 27.02.2009
(51) Int. Cl.: B62D 35/00, F16B 5/07

(54) **Luftleitbauteil und Karosserievorbau eines Kraftfahrzeuges**
Air conducting component and bodywork font end of a vehicle
Composant de guidage d'air et saillie de carrosserie d'un véhicule automobile

(30) Priorität: 22.04.2008 DE 102008020082
(43) Veröffentlichungstag der Anmeldung: 28.10.2009
(73) Patentinhaber: Dr. Ing. h.c. F. Porsche AG, 70435 Stuttgart (DE); Faurecia Exteriors GmbH, 31655 Stadthagen (DE)
(72) Erfinder: Würfel, Manfred, 71229 Leonberg (DE); Wachter, Erwin, 91792 Ellingen-Stopfenheim (DE)

(56) Entgegenhaltungen:
- JP-U- 61 109 903
- JP-U- 62 095 967

## Beschreibung

Die Erfindung betrifft ein Luftleitbauteil eines Kraftfahrzeugs, mit hakenförmigen Vorsprüngen, die durch ihre Form und Anordnung dazu eingerichtet sind, in Ausnehmungen eines Karosserievorbaus des Kraftfahrzeugs eingeschoben zu werden. Die Erfindung betrifft darüber hinaus einen zur Montage eines Luftleitbauteils eingerichteten Karosserievorbau, der Ausnehmungen aufweist, die durch ihre Form und Anordnung dazu eingerichtet sind, Vorsprünge des Luftleitbauteils aufzunehmen.

Bei dem Luftleitbauteil handelt es sich in einer Ausgestaltung um einen Frontspoiler, der an einer Stoßfängerverkleidung am Bug der Kraftfahrzeugkarosserie befestigt wird.

Ein solches Luftleitbauteil und ein solcher Karosserievorbau ist jeweils aus der US 2004/0135383 bekannt. Nach dieser Schrift werden Führungs- und Befestigungsbereiche eines Frontspoilers durch eine quer zur Fahrtrichtung verlaufende Nut (spoiler mount groove) des Karosserievorbaus (front bumper) aufgenommen und gehalten. Der Spoiler weist eine quer zur Fahrtrichtung verlaufende Struktur (fitting base section) auf, die formschlüssig in der Nut liegt. Sowohl die Nut als auch die Struktur besitzen einen konischen Querschnitt, der ein gegen die Fahrtrichtung erfolgendes Einschieben des Spoilers in die Nut begrenzt. Zur Befestigung weist der Spoiler ferner in Fahrzeuglängsrichtung nach hinten weisende Befestigungsbereiche (insert/mount section) auf, die tiefer in die Nut eingreifen. Jeder Befestigungsbereich trägt einen federnden Riegel (latching/fixing section), der durch die Nut hindurch eine obere Innenkante der Nut hintergreift und den Spoiler damit gegen ein Hinausziehen in Fahrzeuglängsrichtung sichert. Zusätzliche Befestigungselemente wie Tüllen und/oder Clips greifen durch sich überdeckende Löcher in den Befestigungsbereichen des Spoilers und einem Unterteil des Karosserievorbaus hindurch und halten Spoiler und Karosserievorbau zusammen.

Zur Montage wird der Spoiler in einem ersten Schritt in die Nut eingeschoben und dabei durch die federnden Riegel in einer Montagestellung vorläufig fixiert. In einem zweiten Schritt erfolgt die weitere Befestigung durch Einsetzen der Befestigungselemente.

Das Dokument JP 62095967 offenbart ein Luftleitbauteil nach dem Oberbegriff des Anspruchs 1 bzw. des Anspruchs 7.

Die Aufgabe der Erfindung besteht in der Angabe eines Befestigungskonzeptes, das eine einfachere und damit sowohl Zeit als auch Kosten sparende Montage und Demontage eines Luftleitbauteils ermöglicht. Zudem sollen bei der Montage und Demontage keine Werkzeuge erforderlich sein.

Diese Aufgabe wird jeweils mit den Merkmalen der unabhängigen Ansprüche gelöst.

Zur Montage wird das Luftleitbauteil mit seiner Montagefläche an die Außenseite des Vorbaus so angelegt, dass die aus der Montagefläche aufragenden Vorsprünge in die Ausnehmungen des Vorbaus eingreifen. Anschließend wird das Luftleitbauteil quer zu einer Längsachse des Kraftfahrzeugs verschoben, wobei die Vorsprünge innerhalb der Ausnehmungen verschoben werden, bis jeder Vorsprung im montierten Zustand einen Rand der Ausnehmung auf einer der Montagefläche gegenüberliegenden Innenseite des Vorbaus durch die Ausnehmung hindurch hintergreift. Die Montage erfolgt damit im Wesentlichen durch eine einzige Querverschiebung des passend an die Außenseite des Karosserievorbaus angelegten Luftleitbauteils, ohne dass anschließend weitere Befestigungselemente wie Nieten, Schrauben oder Clips verwendet werden müssen.

Dadurch wird die Zahl der benötigten Teile und Montagebewegungen, seien es Handgriffe eines Monteurs oder maschinell erfolgende Arbeitsschritte eines Fertigungsroboters, reduziert. Ein großer Vorteil ergibt sich ferner dadurch, dass das Luftleitbauteil durch eine umgekehrte erfolgende Demontagebewegung leicht demontierbar ist, was die Zeitersparnis im Reparaturfall im entsprechend vergrößert.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine perspektivische Darstellung von Bereichen eines Luftleitbauteils und eines Kraftfahrzeugvorbaus im nicht montierten Zustand;
- Fig. 2: eine Draufsicht auf einen ersten Endbereich des Luftleitbauteils; und
- Fig. 3: eine Draufsicht auf eine Innenseite des Karosserievorbaus mit einem dem ersten Endbereich gegenüberliegenden zweiten Endbereich des Luftleitbauteils im montierten Zustand.

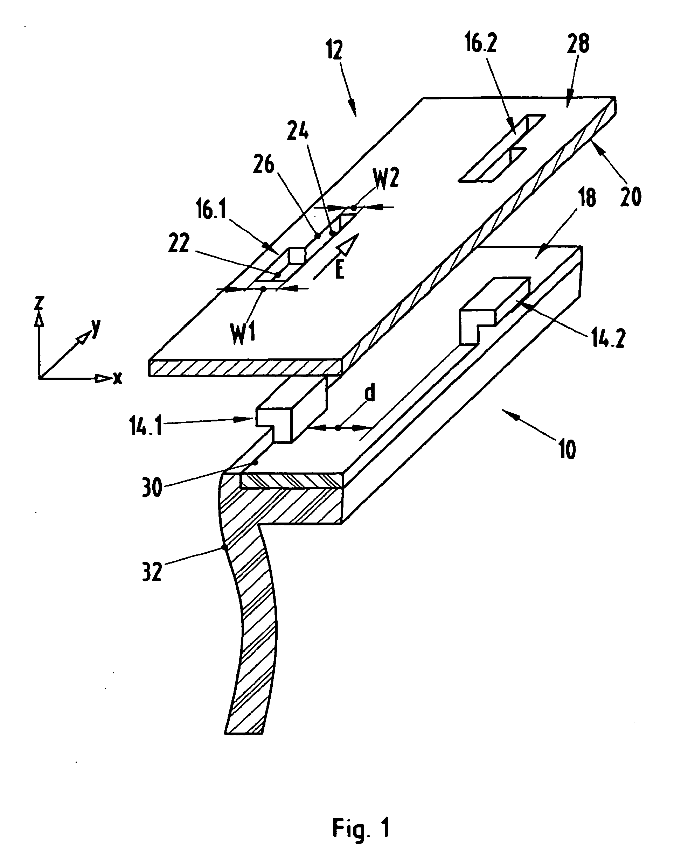

Im Einzelnen zeigt die Fig. 1 einen mittleren Bereich eines Luftleitbauteils 10 zusammen mit einem mittleren Bereich eines Karosserievorbaus 12, an dem das Luftleitbauteil 10 befestigt wird. Die x-Richtung ist zur Fahrzeuglängsachse parallel und weist zum Heck des Kraftfahrzeugs. Die y-Richtung weist zur rechten Seite des Kraftfahrzeugs und die z-Richtung liegt parallel zur Hochachse des Kraftfahrzeugs und weist von der Fahrbahn weg. Eine solche Ausrichtung des Luftleitbauteils ist für einen Frontspoiler als Luftleitbauteil 10 charakteristisch.

Zur Befestigung an dem Karosserievorbau 12 weist das Luftleitbauteil 10 hakenförmige Vorsprünge 14.1, 14.2 auf, die durch ihre Form und Anordnung dazu eingerichtet sind, in Ausnehmungen 16.1, 16.2 des Karosserievorbaus 12 eingeschoben zu werden, wobei das Einschieben zunächst in z-Richtung erfolgt. Das Luftleitbauteil 10 weist eine Montagefläche 18 auf, die dazu ausgestaltet ist, im montierten Zustand des Luftleitbauteils 10 an einer Außenseite 20 des Vorbaus 12 anzuliegen. Die Vorsprünge 14.1, 14.2 ragen aus der Montagefläche 18 auf.

Der Karosserievorbau 12 ist entsprechend zur Montage des Luftleitbauteils 10 eingerichtet, wobei insbesondere die Ausnehmungen 16.1, 16.2 durch ihre Form und Anordnung dazu eingerichtet sind, die Vorsprünge 14.1, 14.2 des Luftleitbauteils 10 aufzunehmen. Der Karosserievorbau 12 ist in einer Ausgestaltung eine Stoßfängerverkleidung des Kraftfahrzeugs.

Jede Ausnehmung 16.1, 16.2 weist einen ersten Bereich 22 mit einer größeren lichten Weite W1 und einen zweiten Bereich 24 mit einer kleineren lichten Weite W2 auf. Die größere lichte Weite W1 ist so auf Abmessungen der Vorsprünge 14.1, 14.2 des Luftleitbauteils 10 abgestimmt, dass die ersten Bereiche 22 die Vorsprünge 14.1, 14.2 beim Anlegen der Montagefläche 18 des Luftleitbauteils 10 an die Außenseite 20 des Vorbaus 12 aufnehmen, beziehungsweise dass die Vorsprünge in z-Richtung in die betreffende Ausnehmung hinein und hindurch geschoben werden kann. Die kleinere lichte Weite W2 ist so auf Abmessungen der Vorsprünge 14.1, 14.2 des Luftleitbauteils 10 abgestimmt, dass sie ein Einschieben der Vorsprünge 14.1, 14.2 aus dem ersten Bereich 22 in den zweiten Bereich 24 längs einer Einschieberichtung E erlaubt, wobei die Vorsprünge 14.1, 14.2 einen Rand 26 des zweiten Bereichs 24 der Ausnehmung 16.1, 16.2 im eingeschobenen Zustand formschlüssig hintergreifen.

Die ersten Bereiche 22 und die zweiten Bereiche 24 sind bevorzugt quer zur Fahrzeuglängsachse nebeneinander angeordnet, wobei der Übergang von der ersten lichten Weite W1 auf die zweite lichte Weite W2 in einer einzigen Stufe erfolgt. Eine alternativ bevorzugte Ausgestaltung sieht vor, dass der Übergang von der ersten lichten Weite W1 auf die zweite lichte Weite W2 rampenförmig erfolgt.

Die Befestigung des Luftleitbauteils 10 an dem Vorbau 12 erfolgt durch Anlegen der Montagefläche 18 an die Außenseite 20, wobei das Anlegen so erfolgt, dass die Vorsprünge 14.1, 14.2 durch die ersten Bereiche 22 der Aufnahmen 16.1, 16.2 aufgenommen werden. Anschließend wird das Luftleitbauteil 10 in der Einschieberichtung E, die im Wesentlichen der Fahrzeugquerrichtung y entspricht, bis zu einem Anschlag verschoben. Bei großer Länge des Luftleitbauteils kann es hilfreich sein, wenn Vorsprünge und Aufnahmen so aufeinander abgestimmt sind, dass das Verhaken nach und nach, quasi nach Art eines Reißverschlusses, erfolgt. Das hat den Vorteil, dass der Werker den bereits verhakten Bereich nicht mehr festhalten muss.

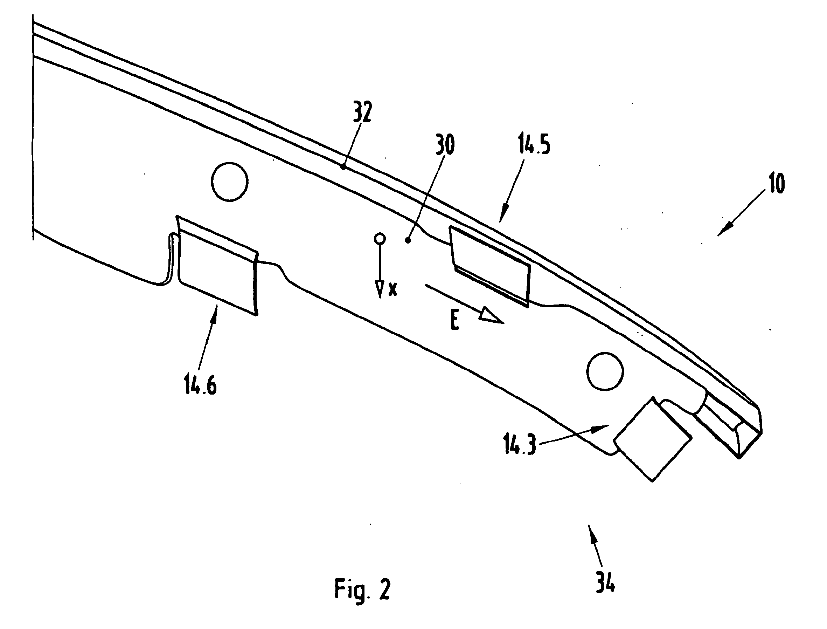

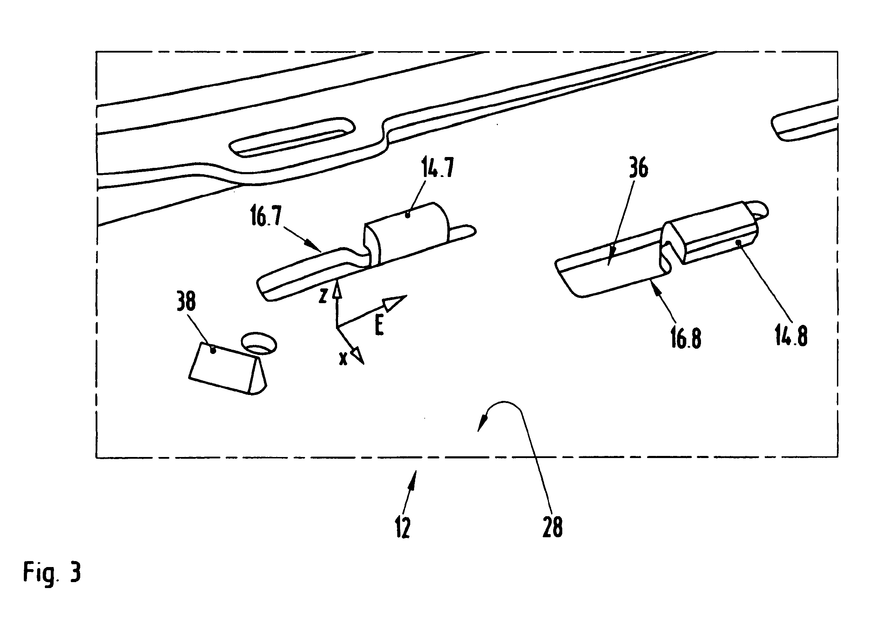

Eine Sicherung gegen ein späteres unbeabsichtigtes Verschieben erfolgt durch Rastmittel, die in seitlichen Endbereichen von Luftleitbauteil 10 und Vorbau 12 angeordnet sind und die weiter unten mit Bezug auf die Figuren 2 und 3 noch näher erläutert werden.

Die Abmessungen der Vorsprünge 14.1, 14.2 sind auf Abmessungen der Ausnehmungen 16.1, 16.2 des Vorbaus 12 so abgestimmt, dass jeder Vorsprung 14.1, 14.2 im montierten Zustand den Rand 26 der Ausnehmung 16.1, 16.2 auf einer der Montagefläche 18 gegenüberliegenden Innenseite 28 des Vorbaus 12 durch die Ausnehmung 16.1, 16.2 hindurch hintergreift. Die Form und Anordnung der Vorsprünge 14.1, 14. 2 ist darüber hinaus so auf die Form und Anordnung der Ausnehmungen 17.1, 16.2 abgestimmt, dass ein quer zu einer Längsachse des Kraftfahrzeugs erfolgendes Einschieben der Vorsprünge in die Ausnehmungen möglich ist.

In der in der Fig. 1 dargestellten Ausgestaltung ist der Vorsprung 16.1 in einem zur Fahrzeuglängsrichtung parallelen Abstand d zu dem Vorsprung 16.2 angeordnet. Eine bevorzugte Ausgestaltung zeichnet sich durch weitere, über die Montagefläche in y-Richtung verteilte Vorsprünge aus, von denen eine erste Teilmenge in Fahrtrichtung vorne am Luftleitbauteil 10 und eine zweite Teilmenge um einen Abstand d nach hinten versetzt auf den Montagefläche 18 angeordnet ist. Eine weitere Ausgestaltung sieht vor, dass in y-Richtung je ein Vorsprung 16.2 aus der zweiten Teilmenge auf einen Vorsprung 16.1 aus der ersten Teilmenge folgt, so dass sich eine wechselseitige Anordnung der Vorsprünge ergibt.

Durch die wechselseitige Anordnung der Vorsprünge 14.1, 14.2 wird ein Aufspreizen erreicht, das eine Kraftaufnahme sowohl in Fahrtrichtung (-x) als auch gegen die Fahrtrichtung, also in x-Richtung , ermöglicht.

In der Ausgestaltung, die in der Fig. 1 dargestellt ist, besteht das Luftleitbauteil 10 aus zwei miteinander fest verbundenen Teilen 30, 32 mit unterschiedlicher Steifigkeit. Das für die Befestigung an dem Vorbau 12 vorgesehene Teil 30 ist dabei steifer als das eher nachgiebige Teil 32. Durch das steifere Teil 30, das in einer Ausgestaltung aus Polypropylen besteht, wird eine tragfähige, auch hohen Fahrwindbelastungen standhaltende Befestigung erzielt. Durch das nachgiebige Teil 32, das in einer Ausgestaltung aus einem thermoplastischen Elastomer besteht, wird der sogenannte Härteböschungswinkel vergrößert. Beschädigungen bei leichten Kontakten mit Hindernissen wie Bordsteinkanten werden dadurch vermieden und/oder verringert.

Die Fig. 2 zeigt einen ersten seitlichen Endbereich 34 einer Ausgestaltung eines Luftleitbauteils 10, bei dem ein Vorsprung 14.3 in dem ersten seitlichen Endbereich 34 quer zur Einschieberichtung E ausgerichtet ist und einen Anschlag für das quer zur Fahrzeuglängsrichtung -x erfolgende Einschieben bildet. Weitere Vorsprünge 14.5 und 14.6 entsprechen nach ihrer Form und Funktion den Vorsprüngen 14.1 und 14.2 aus der Fig. 1 und unterscheiden sich von diesen im Wesentlichen nur durch ihre Anordnung und Abmessungen. Im Übrigen bezeichnen gleiche Bezugszeichen in den Figuren jeweils ihrer Funktion nach gleiche Elemente, auch wenn Abmessungen und Anordnung unterschiedlich sind.

Die Fig. 3 zeigt eine Draufsicht auf eine Innenseite 28 des Karosserievorbaus 12 mit einem dem ersten Endbereich 34 gegenüberliegenden zweiten Endbereich 36 des Luftleitbauteils 10 im montierten Zustand. Der zweite Endbereich 36 weist eine Rastnase 38 auf, die eine Kante des Vorbaus 12 im montierten Zustand des Luftleitbauteils 10 hintergreift. Um ein Einschwenken der Rastnase 38 zu ermöglichen, besitzt der Teil 30 des Luftleitbauteils 10, der die vergleichsweise höhere Steifigkeit aufweist, eine Sollbiegestelle, die das zerstörungsfreie, im Wesentlichen in z-Richtung erfolgende Einschwenken der Rastnase in den Vorbau 12 erlaubt.

Weitere Vorsprünge 14.7 und 14.8 entsprechen nach ihrer Form und Funktion den Vorsprüngen 14.1 und 14.2 aus der Fig. 1 und unterscheiden sich von diesen im Wesentlichen nur durch ihre Anordnung und Abmessungen.

Im Übrigen zeigt die Fig. 3, wie jeder Vorsprung 14.7, 14. 8 im montierten Zustand einen Rand der zugehörigen Ausnehmung 16.7, 16.8 auf der Innenseite 28 des

Vorbaus 12 durch die Ausnehmung 16.7, 16.8 hindurch hintergreift.

## Patentansprüche

1. Luftleitbauteil (10) eines Kraftfahrzeugs, mit hakenförmigen Vorsprüngen (14.1, 14,2), die durch ihre Form und Anordnung dazu eingerichtet sind, in Ausnehmungen (16.1, 16.2) eines Karosserievorbaus (12) des Kraftfahrzeugs eingeschoben zu werden, **dadurch gekennzeichnet, dass** das Luftleitbauteil (10) eine Montagefläche (18) aufweist, die dazu ausgestaltet ist, im montierten Zustand des Luftleitbauteils (10) an einer Außenseite (20) des Vorbaus (12) anzuliegen, wobei die Vorsprünge (14.1, 14.2) aus der Montagefläche (18) aufragen und Abmessungen aufweisen, die auf Abmessungen der Ausnehmungen (16.1, 16.2) des Vorbaus (12) so abgestimmt sind, dass jeder Vorsprung (14.1, 14.2) im montierten Zustand einen Rand (26) der Ausnehmung (16.1, 16,2) auf einer der Montagefläche (18) gegenüberliegenden Innenseite (28) des Vorbaus (12) durch die Ausnehmung (16.1, 16.2) hindurch hintergreift und wobei die Form und Anordnung der Vorsprünge (14.1, 14.2) ein quer zu einer Längsachse des Kraftfahrzeugs erfolgendes Einschieben der Vorsprünge (14.1, 14.2) in die Ausnehmungen (16.1, 16.2) erlaubt, wobei weitere Vorsprünge (14.5, 14, 6, 14,7, 14,8) über die Montagefläche (18) quer zur Fahrzeuglängsachse verteilt sind, von denen eine erste Teilmenge (14.5, 14,7) in Fahrtrichtung vorne am Luftleitbauteil (10) und eine zweite Teilmenge (14.6, 14.8) nach hinten versetzt auf der Montagefläche (18) angeordnet sind.

2. Luftleitbauteil (10) nach Anspruch 1, **dadurch gekennzeichnet, dass** wenigstens ein Vorsprung aus der ersten Teilmenge (14.5, 14,7) in einem zur Fahrzeuglängsrichtung parallelen Abstand (d) zu einem Vorsprung aus der zweiten Teilmenge (14.6, 14.8) angeordnet ist.

3. Luftleitbauteil (10) nach einem der vorhergehenden Ansprüche, **dadurch gekennzeichnet, dass** ein in einem ersten seitlichen Endbereich (34) des Luftleitbauteils (10) angeordneter Vorsprung (14.3) quer zu einer Einschieberichtung (E) ausgerichtet ist und einen Anschlag für das quer zur Fahrzeuglängsrichtung erfolgende Einschieben bildet.

4. Luftleitbauteil (10) nach Anspruch 3, **dadurch gekennzeichnet, dass** in einem zweiten seitlichen Endbereich (36), der dem ersten seitlichen Endbereich (34) gegenüberliegt, eine Rastnase (38) vorgesehen ist, die eine Kante des Vorbaus (12) im montierten Zustand des Luftleitbauteils (10) hintergreift.

5. Luftleitbauteil (10) nach einem der vorhergehenden Ansprüche, **dadurch gekennzeichnet, dass** es aus zwei miteinander fest verbundenen Teilen (30, 32) mit unterschiedlicher Steifigkeit besteht.

6. Luftleitbauteil (10) nach Anspruch 4 und 5, **dadurch gekennzeichnet, dass** der Teil des Luftleitbauteils (10), der eine vergleichsweise höhere Steifigkeit aufweist, eine Sollbiegestelle besitzt, die ein zerstörungsfreies Einschwenken der Rastnase (38) in den Vorbau (12) ermöglicht.

7. Karosserievorbau (12) eines Kraftfahrzeugs, der Ausnehmungen (16.1, 16.2) aufweist, die durch ihre Form und Anordnung dazu eingerichtet sind, Vorsprünge (14.1, 14,2) des Luftleitbauteils aufzunehmen, um das Luftleitbauteil (10) mit dem Vorbau zu verbinden (12), **dadurch gekennzeichnet, dass** die Form und Anordnung der Ausnehmungen (16.1, 16.2) ein quer zu einer Längsachse des Kraftfahrzeugs erfolgendes Einschieben der Vorsprünge (14.1, 14.2) in die Ausnehmungen erlaubt und wobei der Vorbau (12) eine Außenseite (20) aufweist, die dazu ausgestaltet ist, eine Anlagefläche für eine Montagefläche (18) des Luftleitbauteils (10) zu bilden, und wobei Abmessungen der Ausnehmungen (16.1, 16.2) so auf Abmessungen der Vorsprünge (14.1, 14.2) abgestimmt sind, dass jeder Vorsprung (14.1, 14.2) im montierten Zustand einen Rand (26) der Ausnehmung (16.1, 16.2) auf einer der Montagefläche (18) gegenüberliegenden Innenseite (28) des Vorbaus (12) durch die Ausnehmung (16.1, 16.2) hindurch hintergreift und wobei die Form und Anordnung der Ausnehmungen (16.1, 16.2) ein quer zu einer Längsachse des Kraftfahrzeugs erfolgendes Einschieben der Vorsprünge (14.1, 14.2) in die Ausnehmungen (16.1, 16.2) erlaubt, wobei weitere Vorsprünge (14.5, 14, 6, 14,7, 14,8) über die Montagefläche (18) quer zur Fahrzeuglängsachse verteilt sind, von denen eine erste Teilmenge (14.5, 14,7) in Fahrtrichtung vorne am Luftleitbauteil (10) und eine zweite Teilmenge (14.6, 14.8) nach hinten versetzt auf der Montagefläche (18) angeordnet sind.

8. Vorbau (12) nach Anspruch 7, **dadurch gekennzeichnet, dass** die Ausnehmungen (16.1, 16.2) einen ersten Bereich (22) mit einer größeren lichten Weite (W1) und einen zweiten Bereich (24) mit einer kleineren lichten Weite (W2) aufweisen, wobei die größere lichte Weite (W1) so auf Abmessungen der Vorsprünge (14.1, 14.2) abgestimmt ist, dass die ersten Bereiche (22) die Vorsprünge (14.1, 14.2) beim Anlegen einer Montagefläche (18) des Luftleitbauteils (10) an eine Außenseite (20) des Vorbaus (12) aufnehmen und wobei die kleinere lichte Weite (W2) so auf Abmessungen der Vorsprünge (14.1, 14.2) abgestimmt ist, dass sie ein Einschieben der Vorsprünge 814.1, 14.2) aus dem ersten Bereich (22) in den zweiten Bereich (24) erlaubt, wobei die Vorsprünge (14.1, 14.2) einen Rand (26) des zweiten Bereichs (24) der Ausnehmung (16.1, 16.29 im eingeschobenen Zustand formschlüssig hintergreifen.

9. Vorbau (12) nach Anspruch 8, **dadurch gekennzeichnet, dass** die ersten Bereiche (22) und die zweiten Bereiche (24) quer zur Fahrzeuglängsachse nebeneinander angeordnet sind.

10. Vorbau (12) nach Anspruch 9, **dadurch gekennzeichnet, dass** der Übergang von der ersten lichten Weite (W1) auf die zweite lichte Weite (W2) in einer einzigen Stufe erfolgt.

11. Vorbau (12) nach Anspruch 9 dass der Übergang von der ersten lichten Weite (W1) auf die zweite lichte Weite (W2) rampenförmig erfolgt.

## Claims

1. Air-directing component (10) of a motor vehicle, with hook-shaped projections (14.1, 14.2) which, by means of their shape and arrangement, are designed to be pushed into recesses (16.1, 16.2) of a body front end (12) of the motor vehicle, **characterized in that** the air-directing component (10) has an installation surface (18) which is configured so as, in the fitted state of the air-directing component (10), to bear against an outer side (20) of the front end (12), with the projections (14.1, 14.2) protruding from the installation surface (18) and having dimensions which are matched to dimensions of the recesses (16.1, 16.2) of the front end (12) in such a manner that, in the fitted state, each projection (14.1, 14.2) reaches through the recess (16.1, 16.2) and engages behind an edge (26) of the recess (16.1, 16.2) on an inner side (28) of the front end (12), which inner side is opposite the installation surface (18), and with the shape and arrangement of the projections (14.1, 14.2) permitting the projections (14.1, 14.2) to be pushed transversely with respect to a longitudinal axis of the motor vehicle into the recesses (16.1, 16.2), with further projections (14.5, 14.6, 14.7, 14.8) being distributed over the installation surface (18) transversely with respect to the longitudinal axis of the vehicle, of which projections a first subset (14.5, 14.7) is arranged at the front of the air-directing component (10) in the direction of travel, and a second subset (14.6, 14.8) is arranged offset to the rear on the installation surface (18).

2. Air-directing component (10) according to Claim 1, **characterized in that** at least one projection from the first subset (14.5, 14.7) is arranged at a distance (d) parallel in the longitudinal direction of the vehicle to a projection from the second subset (14.6, 14.8).

3. Air-directing component (10) according to one of the preceding claims, **characterized in that** a projection (14.3) arranged in a first lateral end region (34) of the air-directing component (10) is oriented transversely with respect to a pushing-in direction (E) and forms a stop for the pushing-in operation which takes place transversely with respect to the longitudinal direction of the vehicle.

4. Air-directing component (10) according to Claim 3, **characterized in that** a latching lug (38) is provided in a second lateral end region (36) which is opposite the first lateral end region (34), said latching lug engaging behind an edge of the front end (12) in the fitted state of the air-directing component (10).

5. Air-directing component (10) according to one of the preceding claims, **characterized in that** it comprises two fixedly interconnected parts (30, 32) of differing rigidity.

6. Air-directing component (10) according to Claims 4 and 5, **characterized in that that** part of the air-directing component (10) which has a comparatively greater rigidity has a predetermined bending point which permits the latching lug (38) to be pivoted into the front end (12) without being destroyed.

7. Body front end (12) of a motor vehicle, which has recesses (16.1, 16.2) which, by means of their shape and arrangement, are designed to receive projections (14.1, 14.2) of the air-directing component in order to connect the air-directing component (10) to the front end (12), **characterized in that** the shape and arrangement of the recesses (16.1, 16.2) permits the projections (14.1, 14.2) to be pushed transversely with respect to a longitudinal axis of the motor vehicle into the recesses, and with the front end (12) having an outer side (20) which is configured so as to form a bearing surface for an installation surface (18) of the air-directing component (10), and with dimensions of the recesses (16.1, 16.2) being matched to dimensions of the projections (14.1, 14.2) in such a manner that, in the fitted state, each projection (14.1, 14.2) reaches through the recess (16.1, 16.2) and engages behind an edge (26) of the recess (16.1, 16.2) on an inner side (28) of the front end (12) opposite the installation surface (18), and with the shape and arrangement of the recesses (16.1, 16.2) permitting the projections (14.1, 14.2) to be pushed transversely with respect to a longitudinal axis of the motor vehicle into the recesses (16.1, 16.2), with further projections (14.5, 14.6, 14.7, 14.8) being distributed over the installation surface (18) transversely with respect to the longitudinal axis of the vehicle, of which projections a first subset (14.5, 14.7) is arranged at the front of the air-directing component (10) in the direction of travel, and a second subset (14.6, 14.8) is arranged offset to the rear on the installation surface (18).

8. Front end (12) according to Claim 7, **characterized in that** the recesses (16.1, 16.2) have a first region (22) with a larger clear width (W1) and a second region (24) with a smaller clear width (W2), with the larger clear width (W1) being matched to dimensions of the projections (14.1, 14.2) in such a manner that the first regions (22) receive the projections (14.1, 14.2) when an installation surface (18) of the air-directing component (10) is placed onto an outer side (20) of the front end (12), and wherein the smaller clear width (W2) is matched to dimensions of the projections (14.1, 14.2) in such a manner that it permits the projections (14.1, 14.2) to be pushed out of the first region (22) into the second region (24), with the projections (14.1, 14.2) reaching behind an edge (26) of the second region (24) of the recess (16.1, 16.2) in a form-fitting manner in the pushed-in state.

9. Front end (12) according to Claim 8, **characterized in that** the first regions (22) and the second regions (24) are arranged next to one another transversely with respect to the longitudinal axis of the vehicle.

10. Front end (12) according to Claim 9, **characterized in that** the transition from the first clear width (W1) to the second clear width (W2) takes place in a single step.

11. Front end (12) according to Claim 9, in that the transition from the first clear width (W1) to the second clear width (W2) takes place in the form of a ramp.

## Revendications

1. Composant de guidage d'air (10) d'un véhicule automobile, avec des saillies en forme de crochet (14.1, 14.2) pouvant être introduites du fait de leur forme et de leur agencement dans des évidements (16.1, 16.2) d'un avant-corps de carrosserie (12) du véhicule automobile, **caractérisé en ce que** le composant de guidage d'air (10) présente une surface de montage (18) configurée de façon à reposer à l'état monté du composant de guidage d'air (10) contre un côté extérieur (20) de l'avant-corps (12), les saillies (14.1, 14.2) ressortant de la surface de montage (18) et présentant des dimensions adaptées de telle sorte aux dimensions des évidements (16.1, 16.2) de l'avant-corps (12) que chaque saillie (14.1, 14.2) engrène par l'arrière à l'état monté un bord (26) de l'évidement (16.1, 16.2) sur un côté intérieur (28) de l'avant-corps (12) opposé à la surface de montage (18) en passant à travers l'évidement (16.1, 16.2) et la forme et l'agencement des saillies (14.1, 14.2) permettant une insertion des saillies (14.1, 14.2) transversalement à un axe longitudinal du véhicule automobile dans les évidements (16.1, 16.2), d'autres saillies (14.5, 14.6, 14.7, 14.8) étant réparties sur l'ensemble de la surface de montage (18) transversalement à l'axe longitudinal du véhicule, parmi lesquelles une première quantité partielle (14.5, 14.7) est disposée dans la direction d'avancement à l'avant au niveau du composant de guidage d'air (10) et une deuxième quantité partielle (14.6, 14.8) est disposée vers l'arrière de façon décalée sur la surface de montage (18).

2. Composant de guidage d'air (10) selon la revendication 1, **caractérisé en ce qu'**au moins une saillie appartenant à la première quantité partielle (14.5, 14.7) est disposée à une certaine distance (d) parallèle par rapport à la direction longitudinale du véhicule par rapport à une saillie appartenant à la deuxième quantité partielle (14.6, 14.8).

3. Composant de guidage d'air (10) selon l'une quelconque des revendications précédentes, **caractérisé en ce qu'**une saillie (14.3) disposée dans une première région d'extrémité latérale (34) du composant de guidage d'air (10) est alignée transversalement à une direction d'insertion (E) et forme une butée pour l'insertion se produisant transversalement à la direction longitudinale du véhicule.

4. Composant de guidage d'air (10) selon la revendication 3, **caractérisé en ce qu'**un bec d'encliquetage (38) est prévu dans une deuxième région d'extrémité latérale (36) opposée à la première région d'extrémité latérale (34), ledit bec engrenant par l'arrière une arête de l'avant-corps (12) à l'état monté du composant de guidage d'air (10).

5. Composant de guidage d'air (10) selon l'une quelconque des revendications précédentes, **caractérisé en ce qu'**il se compose de deux parties (30, 32) de différente rigidité fixement reliées entre elles.

6. Composant de guidage d'air (10) selon la revendication 4 et 5, **caractérisé en ce que** la partie du composant de guidage d'air (10) présentant la rigidité la plus élevée possède un point de flexion théorique permettant un basculement vers l'intérieur sans heurt du bec d'encliquetage (38) dans l'avant-corps (12).

7. Avant-corps de carrosserie (12) d'un véhicule automobile, comportant des évidements (16.1, 16.2) conçus pour loger, du fait de leur forme et leur agencement, des saillies (14.1, 14.2) du composant de guidage d'air, pour relier le composant de guidage d'air (10) à l'avant-corps (12), **caractérisé en ce que** la forme et l'agencement des évidements (16.1, 16.2) permettent une insertion des saillies (14.1, 14.2) dans les évidements transversalement à un axe longitudinal du véhicule automobile et l'avant-corps (12) comportant un côté extérieur (20) configuré pour former une surface d'installation pour une surface de montage (18) du composant de guidage d'air (10) et les dimensions des évidements (16.1, 16.2) étant adaptées de telle sorte aux dimensions des saillies (14.1, 14.2) que chaque saillie (14.1, 14.2) engrène par l'arrière à l'état monté un bord (26) de l'évidement (16.1, 16.2) sur un côté intérieur (28) de l'avant-corps (12) opposé à la surface de montage (18) en passant à travers l'évidement (16.1, 16.2) et la forme et l'agencement des évidements (16.1, 16.2) permettant une insertion des saillies (14.1, 14.2) dans les évidements (16.1, 16.2) transversalement à un axe longitudinal du véhicule automobile, des saillies (14.5, 14.6, 14.7, 14.8) supplémentaires étant réparties sur l'ensemble de la surface de montage (18) transversalement à l'axe longitudinal du véhicule, une première quantité partielle (14.5, 14.7) étant disposée dans la direction d'avancement vers l'avant au niveau du composant de guidage d'air (10) et une deuxième quantité partielle (14.6, 14.8) étant disposée vers l'arrière de façon décalée sur la surface de montage (18).

8. Avant-corps (12) selon la revendication 7, **caractérisé en ce que** les évidements (16.1, 16.2) comportent une première région (22) présentant une largeur intérieure (W1) plus importante et une deuxième région (24) présentant une largeur intérieure (W2) plus réduite, la largeur intérieure (W1) la plus importante étant adaptée de telle sorte aux dimensions des saillies (14.1, 14.2) que les premières régions (22) reçoivent les saillies (14.1, 14.2) lors de l'application d'une surface de montage (18) du composant de guidage d'air (10) contre un côté extérieur (20) de l'avant-corps (12) et la plus petite largeur intérieure (W2) étant adaptée de telle sorte aux dimensions des saillies (14.1, 14.2) qu'elle permet une insertion des saillies (14.1, 14.2) de la première région (22) dans la deuxième région (24), les saillies (14.1, 14.2) engrenant par l'arrière un bord (26) de la deuxième région (24) de l'évidement (16.1, 16.2) à l'état inséré, par complémentarité de formes.

9. Avant-corps (12) selon la revendication 8, **caractérisé en ce que** les premières régions (22) et les deuxièmes régions (24) sont disposées côte à côte transversalement à l'axe longitudinal du véhicule.

10. Avant-corps (12) selon la revendication 9, **caractérisé en ce que** la transition entre la première largeur intérieure (W1) et la deuxième largeur intérieure (W2) prend une forme d'étage unique.

11. Avant-corps (12) selon la revendication 9, **caractérisé en ce que** la transition entre la première largeur intérieure (W1) et la deuxième largeur intérieure (W2) prend une forme de rampe.
